(19) Europäisches Patentamt
European Patent Office
Office européen des brevets

(11) Numéro de publication : **0 156 735 B1**

(12) **FASCICULE DE BREVET EUROPÉEN**

(45) Date de publication du fascicule du brevet : **27.07.88**

(51) Int. Cl.⁴ : **C 22 B 59/00**, C 22 B 3/00, C 01 F 17/00

(21) Numéro de dépôt : **85400594.9**

(22) Date de dépôt : **27.03.85**

(54) **Procédé de séparation des terres rares par extraction liquide-liquide.**

(30) Priorité : **02.04.84 FR 8405139**

(43) Date de publication de la demande :
**02.10.85 Bulletin 85/40**

(45) Mention de la délivrance du brevet :
**27.07.88 Bulletin 88/30**

(84) Etats contractants désignés :
**AT BE CH DE FR GB IT LI LU NL SE**

(56) Documents cités :
**EP-A- 0 026 132**
**EP-A- 0 079 258**
**FR-A- 1 566 623**
**FR-A- 2 267 380**
**FR-A- 2 460 275**
**US-A- 4 382 016**
**CHEMICAL ABSTRACTS, vol. 82, 1975, page 344, no. 116863f, Columbus, Ohio, US; I.G. DE ALMEIDA: "Mechanism for the extraction of lanthanides by diphenylphosphinic acid"**
**CHEMICAL ABSTRACTS, vol. 81, 1974, page 778, no. 180681b, Columbus, Ohio, US; M. MARHOL et al.: "Selective ion exchangers containing phosphorus in their functional groups. I. Sorption and separation of some bivalent and trivalent ions"**
**Le dossier contient des informations techniques présentées postérieurement au dépôt de la demande et ne figurant pas dans le présent fascicule.**

(73) Titulaire : **RHONE-POULENC CHIMIE**
**25, quai Paul Doumer**
**F-92408 Courbevoie Cédex (FR)**

(72) Inventeur : **Sabot, Jean-Louis**
**3, avenue Pascal**
**F-78600 - Maisons Laffitte (FR)**
Inventeur : **Rollat, Alain**
**20, rue Duhesme**
**F-75018 - Paris (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

**EP 0 156 735 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé de séparation par solvant des éléments terres rares contenus dans des solutions aqueuses.

Plus précisément, l'invention a trait à un procédé de séparation par extraction liquide-liquide des terres rares contenues dans des solutions aqueuses de nitrates de ces éléments.

L'expression « terres rares » utilisée conformément à l'invention comprend les éléments de terres rares appelés lanthanides ayant des numéros atomiques de 57 à 71 inclus et l'yttrium de numéro atomique égal à 39.

Dans l'exposé qui suit de la présente invention, on entend par « terres rares cériques », les éléments les plus légers des terres rares commençant avec le lanthane et s'étendant jusqu'au néodyme conformément au numéro atomique et l'on désigne par « terres rares yttriques » les éléments les plus lourds des terres rares conformément au numéro atomique, commençant avec le samarium et finissant avec le lutécium et comprenant l'yttrium.

Il est bien connu que les terres rares sont difficiles à séparer du fait de la similitude de leurs propriétés.

On a élaboré pour la séparation de ces éléments très proches des procédés qui ont pris une importance particulière dans la séparation des terres rares à savoir les procédés d'extraction liquide-liquide. Ils sont basés sur l'extraction sélective de l'une des terres rares à partir de la solution dans laquelle elles sont contenues à l'aide d'un solvant d'extraction qui est non miscible avec la solution.

A titre de solvant d'extraction, certains acides organophosphorés sont déjà utilisés pour la séparation des terres rares en raison d'une sélectivité importante, aussi bien vis-à-vis des terres rares cériques que des terres rares yttriques.

C'est ainsi que l'on utilise couramment, comme solvant d'extraction, les diesters de l'acide phosphorique en particulier l'acide di-(éthyl-2 hexyl) phosphorique ou H.D.E.H.P. (Cf. brevet Fr-A 2 233 284). Cependant ceux-ci exigent en contrepartie de leur bonne sélectivité des coûts réactifs importants lors de la séparation des terres rares yttriques en raison d'une réextraction difficile au moment de la régénération du solvant. Les coûts énergétiques sont parfois accrus en raison de la nécessité de procéder à une concentration des solutions qui sont obtenues diluées à la réextraction pour la même raison.

Il est également connu selon De Almeida et al Nucl. Sci. Abstr. 1974, 30 (9) 23571 (Chemical Abstracts 82, 116863 f (1975)) qu'il est possible d'extraire les terres rares à l'aide de l'acide diphénylphosphinique.

Des progrès furent réalisés en utilisant des esters d'acides alkylphosphoniques notamment l'ester mono-2 éthylhexylique de l'acide éthyl-2 hexylphosphonique ou H.E.P. (E.H.P.) (Cf brevet Fr-A-2 460 275) qui permettent des séparations plus économiques grâce à une faible constante d'extraction d'où une réextraction plus aisée. Néanmoins, les inconvénients précités se retrouvent bien que diminués pour la séparation des terres rares yttriques, les plus lourdes.

Un autre moyen de réduire la valeur de la constante d'extraction consiste à remplacer les diluants habituellement utilisés qui sont des hydrocarbures aliphatiques tels que le kérosène ou le dodécane par des hydrocarbures aromatiques comme par exemple le xylène ou le Solvesso®. Cette solution présente des inconvénients car ces derniers sont moins résistants à la dégradation des divers agents chimiques.

La demanderesse a découvert qu'une nouvelle classe de solvants obviait aux inconvénients précités et conduisait à des constantes d'extraction plus faibles tout en conservant une sélectivité comparable à celle des deux catégories d'agents d'extraction précités.

La présente invention concerne un procédé de séparation de lanthanides et d'yttrium contenus dans une solution aqueuse renfermant au moins deux terres rares par extraction liquide-liquide entre une phase aqueuse contenant les terres rares à séparer sous forme nitrate et une phase organique contenant un composé organophosphinique caractérisé par le fait que l'agent d'extraction est constitué par au moins un composé organophosphinique répondant à la formule (I) :

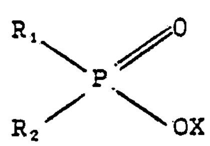

(I)

où dans ladite formule :

$R_1$, $R_2$, identiques ou différents, éventuellement substitués, représentent des radicaux alkyle, cycloalkyle, alkoxyalkyle, alkylcycloalkyle,

X est soit un atome d'hydrogène, soit un groupement salifié.

On précisera que les radicaux $R_1$ et $R_2$ peuvent être porteurs de groupements substituants tels que, par exemple, des groupements hydroxyle ou des atomes d'halogènes notamment le chlore et le fluor et que X peut représenter en tant que groupement salifié, un métal alcalin, de préférence le sodium ou un métal alcalino-terreux ou un radical ammonium.

Parmi la liste des symboles précédemment donnée, $R_1$ et $R_2$ représentent préférentiellement des radicaux alkyle linéaires ou ramifiés ayant au moins 6 atomes de carbone ou des radicaux cycloalkyle ayant au moins 6 atomes de carbone. X est de préférence un atome d'hydrogène.

On donne, ci-après, à titre illustratif et non limitatif des exemples d'acides organosphosphiniques convenant bien aux fins de l'invention.

l'acide diméthylphosphinique
l'acide diéthylphosphinique
l'acide di-n-propylphosphinique
l'acide diisopropylphosphinique
l'acide di-n-butylphosphinique
l'acide di-isobutylphosphinique
l'acide di-n-pentylphosphinique
l'acide di-n-hexylphosphinique
l'acide di-n-heptylphosphinique
l'acide di-n-octylphosphinique
l'acide bis(éthyl-2 hexyl) phosphinique
l'acide di-n-nonylphosphinique
l'acide di-n-décylphosphinique
l'acide di-n-dodécylphosphinique
l'acide di-n-tétradécylphosphinique
l'acide di-n-hexadécylphosphinique
l'acide di-n-eicosylphosphinique
l'acide bis (triméthyl-2,4,4 pentyl) phosphinique
l'acide (triméthyl-2,4,4 pentyl) cyclohexylphosphinique
l'acide (triméthyl-2,4,4 pentyl) octylphosphinique
l'acide dicyclopentylphosphinique
l'acide dicyclohexylphosphinique
l'acide dicyclooctylphosphinique
l'acide cyclohexyl, n-butylphosphinique
l'acide cyclopentyl, n-dodécylphosphinique
l'acide cyclooctyl, éthylphosphinique
l'acide cyclohexyl, hydroxy-1 cyclohexylphosphinique
l'acide bis (méthyl-2 hydroxy-1 pentyl) phosphinique
l'acide méthyl-1 pentyl, hydroxy-1, méthyl-1 pentylphosphinique
l'acide (hydroxy-1 méthyl-1 éthyl) isopropylphosphinique.

Les différents acides phosphiniques peuvent être mis en œuvre seuls ou en mélange.

Les acides phosphiniques utilisés préférentiellement dans le procédé de l'invention sont :
l'acide di-n-octylphosphinique
l'acide bis (éthyl-2 hexyl) phosphinique
l'acide bis (triméthyl-2,4,4 pentyl) phosphinique
l'acide triméthyl-2,4,4 pentyl, cyclohexylphosphinique
l'acide dicyclohexylphosphinique

On peut faire appel aux composés de formule (I) à l'état pur ou bien sous forme d'un produit commercial auquel cas ils peuvent contenir de faibles quantités d'impuretés notamment des oxydes de phosphine.

La phase aqueuse que l'on met en contact avec l'agent d'extraction peut être constituée par une solution aqueuse provenant de la redissolution par l'acide nitrique, des hydroxydes obtenus à la suite de l'attaque sodique des minerais contenant les terres rares tels que la monazite, la bastnaesite et le xénotime. On peut également mettre en œuvre toute autre solution de sel de terres rares après changement de l'anion présent en anion nitrate.

Le procédé de l'invention s'applique aux solutions telles quelles ou bien après leur avoir fait subir une concentration préalable.

Généralement, on met en œuvre le procédé d'extraction liquide-liquide sur des solutions aqueuses de nitrates de terres rares ayant une concentration exprimée en oxydes de terres rares variant entre 20 g/l et 500 g/l : les bornes données ne présentant aucun caractère critique. D'une manière préférentielle, elles ont une concentration comprise entre 100 g/l et 500 g/l.

Elles présentent une normalité variant généralement entre 0,01 N et 3,0 N.

La phase organique selon le procédé de l'invention contient éventuellement outre l'agent d'extraction, un diluant organique n'altérant pas les propriétés complexantes du composé organophosphinique. Comme diluants susceptibles d'être utilisés, on peut mettre en œuvre ceux habituellement mis en œuvre pour réaliser des opérations d'extraction liquide-liquide. Parmi ceux-ci, on peut citer les hydrocarbures aliphatiques comme par exemple, l'hexane, l'heptane, le dodécane et les coupes pétrolières du type kérosène : les hydrocarbures aromatiques comme par exemple, le benzène, le toluène, l'éthylbenzène, le xylène et les coupes du type Solvesso (marque déposée par la Société EXXON) et enfin les dérivés halogénés comme, par exemple, le chloroforme et le tétrachlorure de carbone.

On peut également utiliser un mélange de ces diluants.

Le pouvoir d'extraction de la solution organique vis-à-vis des terres rares, augmente lorsqu'on augmente la concentration du composé organophosphinique dans la phase organique ; cependant, les facteurs de séparation des éléments entre eux ne sont pas modifiés de façon notable pour la concentration en composé organosphosphinique. Ainsi, la concentration en composé organophosphinique dans la phase organique n'est pas un facteur critique selon l'invention et peut varier dans de larges limites. Elle peut varier de 5 % du volume de la phase organique lorsque l'agent d'extraction est en solution dans un diluant jusqu'à environ 100 % lorsque l'agent d'extraction est utilisé pur.

La phase organique selon le procédé de l'invention peut également contenir divers agents modifieurs dont un des buts essentiels est d'améliorer les propriétés hydrodynamiques du système sans altérer les propriétés complexantes du composé organophosphinique. Parmi les composés convenant bien, on peut citer notamment, les composés à fonction alcool et, en particulier, les alcools lourds dont le nombre d'atomes de carbone est compris entre 4 et 15 et les phénols lourds, ainsi que divers autres composés tels que certains esters phosphoriques comme le tri-butylphosphate, les oxydes de phosphine ou les sulfoxydes. Une proportion comprise entre 3 et 20 % en volume rapportée à la phase organique est généralement favorable.

Dans le choix des conditions d'extraction, la concentration en ions hydrogène $H^+$ dans la phase aqueuse est importante puisqu'elle peut faciliter l'extraction de la ou des terres rares à extraire dans la phase organique.

Lorsque la concentration en ions $H^+$ est faible dans la phase aqueuse, les terres rares se distribuent davantage dans la phase organique tandis que lorsque la concentration en ions $H^+$ est élevée dans la phase aqueuse, les terres rares se distribuent mieux dans la phase aqueuse.

Il est donc souhaitable que l'extraction soit conduite à une faible concentration en ions $H^+$ dans la phase aqueuse : le pH d'extraction étant de préférence, supérieur ou égal à 3. A cet effet, la concentration de la phase aqueuse en ions $H^+$ peut être ajustée par addition d'une base alcaline qui peut être la soude ou l'ammoniaque. On fait appel de préférence à une solution aqueuse d'ammoniaque diluée ou concentrée : sa normalité peut varier dans de larges limites entre 1 et 10 N mais il est préférable de mettre en œuvre une solution concentrée d'ammoniaque.

La quantité de base alcaline à ajouter doit correspondre à la quantité stœchiométrique de la ou des terres rares que l'on souhaite extraire dans la phase organique.

Au cours de la phase d'extraction, on met en contact la phase organique et la phase aqueuse à une température qui ne présente aucun caractère critique : elle est choisie généralement entre 10 °C et 50 °C et est, le plus souvent, comprise entre 20 °C et 40 °C.

Le rapport en débit de la phase organique et de la phase aqueuse est en corrélation avec la concentration de l'agent d'extraction et il est choisi conformément à la concentration des terres rares à extraire dans la phase aqueuse et conformément à l'appareillage utilisé pour la mise en œuvre du procédé de l'invention. Il est déterminé selon des modes de calculs bien connus de l'homme de l'art.

Lorsque certaines terres rares ont été extraites dans la phase organique en faibles quantités alors qu'elles auraient dû rester dans la phase aqueuse, il est parfois nécessaire de faire intervenir une étape de lavage après celle d'extraction.

Dans l'étape de lavage, la phase organique est lavée avec une solution aqueuse contenant des ions nitrate telle qu'une solution aqueuse d'acide nitrique ou une solution aqueuse de nitrates de terres rares de même nature que les terres rares à extraire et qui peuvent être contenus dans la partie de la phase aqueuse obtenue dans l'opération suivante de régénération du solvant d'extraction.

Lorsque le lavage est effectué à l'aide d'une solution d'acide nitrique, sa normalité ne présente aucun caractère critique et peut être comprise entre 0,1 N et 10 N, de préférence entre 0,3 N et 5 N. Lors de l'emploi d'une solution aqueuse de nitrates de terres rares, sa concentration en terres rares exprimée en oxydes de terres rares peut être comprise entre 5 et 500 g/l, de préférence entre 25 et 300 g/l.

Après les opérations d'extraction et de lavage suivies d'une séparation de la phase aqueuse et de la phase organique, on effectue une étape de régénération du solvant d'extraction.

On sépare la ou les terres rares extraites dans la phase organique par mise en contact de cette dernière avec une solution aqueuse acide telle que, par exemple, une solution aqueuse d'acide nitrique, d'acide sulfurique, d'acide chlorhydrique ou d'acide perchlorique. On utilise de préférence, l'acide nitrique.

La normalité de la solution d'acide n'est pas critique et peut varier entre 0,5 N et 10 N, de préférence 1 N et 5 N.

La ou les terres rares extraites sont recueillies dans la phase aqueuse tandis que le solvant d'extraction peut être recyclé à l'étape d'extraction. Ce recyclage n'est pas essentiel dans la présente invention mais il est souhaitable pour des raisons économiques.

On définit, ci-après, un schéma permettant de séparer conformément au procédé de l'invention qui vient d'être exposé, au moins deux terres rares jusqu'à n terres rares.

Dans le cas de la séparation de deux terres rares symbolisées par $TR_1$ et $TR_2$, on définit le facteur de séparation entre ces terres rares comme étant une relation entre les coefficients de partage de $TR_1$ et $TR_2$

$$F = P\ TR_1/P\ TR_2$$

Le coefficient de partage est égal au rapport entre la concentration de $TR_1$ (ou $TR_2$) dans la phase organique et la concentration de $TR_1$ (ou $TR_2$) dans la phase aqueuse.

Pour que la séparation entre $TR_1$ et $TR_2$ soit possible, F doit être différent de 1.

Si $TR_1$ est la terre rare qui possède le coefficient de partage le plus élevé, dans ce cas, F est supérieur à 1.

Selon l'invention, on procède à la séparation d'au moins deux terres rares $TR_1$ et $TR_2$ par extraction liquide-liquide entre une phase aqueuse contenant au moins les nitrates de ces métaux et une phase organique contenant ledit composé organophosphinique en procédant de la manière qui suit :

dans une première étape, on réalise la séparation entre $TR_1$ et $TR_2$ par extraction de $TR_1$ dans la phase organique ; $TR_2$ restant essentiellement en phase aqueuse

dans une deuxième étape, on effectue le lavage sélectif de la phase organique contenant $TR_1$ et une faible quantité de $TR_2$ à l'aide d'une solution aqueuse contenant des ions nitrate permettant d'éliminer $TR_2$ de la phase organique par passage dans la phase aqueuse.

on sépare ensuite la phase organique de la phase aqueuse

dans une troisième étape, on effectue la régénération du solvant d'extraction par mise en contact de la phase organique avec une solution aqueuse acide.

Les conditions opératoires de chaque étape ont été précédemment données.

Selon l'invention, on peut séparer un mélange de n terres rares en deux sous-groupes en assimilant chaque sous-groupe à $TR_1$ et $TR_2$.

Si l'on a un mélange de n terres rares à séparer individuellement, on répétera la succession des trois étapes qui viennent d'être définies, (n — 1) fois afin de séparer toutes les terres rares entre elles.

La réalisation pratique de l'invention peut être effectuée selon la technique classique de contre-courants telle qu'exposée ci-dessus mais aussi par les techniques de co-courants et de courants croisés bien connues de l'homme de l'art.

Les diverses étapes de mises en contact et de lavage peuvent être réalisées notamment dans des dispositifs classiques d'extraction liquide-liquide fonctionnant à contre-courant. De tels dispositifs comprennent généralement plusieurs étages de systèmes mélangeurs-décanteurs ou de colonnes garnies et/ou agitées, agencés pour réaliser des opérations d'extraction, de lavage sélectif et de récupération des éléments terres rares en phase aqueuse et de régénération de l'agent d'extraction.

Les exemples suivants sont donnés à titre indicatif et ne peuvent être considérés comme une limite du domaine et de l'esprit de l'invention.

Dans les exemples, les pourcentages donnés sont exprimés en poids.

## Exemple 1

Procédé de séparation de l'ytterbium à partir d'un mélange contenant des nitrates d'ytterbium et de lutécium

On réalise cet exemple en suivant le mode de mise en œuvre illustré par la figure 1.

L'appareillage utilisé pour la séparation desdites terres rares comprend :

une première batterie d'extraction liquide-liquide à plusieurs étages du type mélangeur-décanteur, fonctionnant à contre-courant et constituée d'une section d'extraction (a) comportant 16 étages théoriques et d'une section de lavage (a') comportant 10 étages théoriques

une section de régénération-récupération du solvant d'extraction (b) comportant 4 étages théoriques.

Le mélange initial de terres rares à séparer est une solution de nitrates de terres rares présentant une acidité 0,1 N et une concentration exprimée en oxydes de terres rares de 38,7 g/l répartis de la façon suivante :

| | |
|---|---|
| oxyde d'ytterbium | 87,5 % |
| oxyde de lutécium | 12,5 % |

L'agent d'extraction utilisé est l'acide bis (triméthyl-2,4,4 pentyl) phosphinique. Il est mis en œuvre sous sa forme commercialisée sous la marque CYANEX 272® et contient 10 % d'oxyde de tri (triméthyl-2,4,4 pentyl) phosphine.

Ledit agent d'extraction est mis en solution dans le kérosène à raison de 1 mole/litre et le mélange obtenu sera appelé solvant d'extraction.

Avant de détailler les différentes opérations, on précisera que l'on choisit comme entrée et sortie des unités d'extraction-lavage et de régénération-récupération, le sens de circulation de la phase organique.

On réalise la succession des étapes suivantes :

on introduit en sortie de l'unité d'extraction (a), par le conduit (1) la solution de nitrates de terres rares à séparer avec un débit de 45 l/h : en entrée de l'unité d'extraction (a), on introduit d'une part par le produit (2), le solvant d'extraction avec un débit de 50 l/h et d'autre part par le conduit (3) une solution aqueuse d'ammoniaque 10 N avec un débit de 6,25 l/h

on introduit dans l'unité de lavage (a') par le conduit (4), une solution aqueuse acide nitrique 0,45 N

avec un débit de 132 l/h

on recueille à l'entrée de l'unité (a) par le conduit (5), une solution aqueuse de nitrates de terres rares ayant une concentration exprimée en oxydes de terres rares de 8 g/l et dont la composition est la suivante : 99,3 % de $Yb_2O_3$ et 0,7 % de $Lu_2O_3$

on introduit la phase organique provenant de la section de lavage (a') dans la section de régénération-récupération (b) toujours avec le même débit de 50 l/h à contre-courant d'une solution d'acide nitrique 1 N admise par le conduit (6) avec un débit de 3 l/h

on recueille à l'entrée de la section de régénération-récupération (b) par le conduit (7) une solution aqueuse de nitrates de terres rares ayant une concentration en terres rares exprimée en oxydes de terres rares de 98 g/l et dont la composition est la suivante : 74 % de $Lu_2O_3$ et 26 % de $Yb_2O_3$

on récupère à la sortie de la section régénération-récupération (b) par le conduit (8), le solvant d'extraction purifié qui peut être recyclé en (2) dans l'unité d'extraction (a) avec le même débit : toutefois, ce recyclage n'est pas essentiel dans la présente invention mais il est souhaitable pour des raisons économiques.

Le procédé tel que décrit permet d'obtenir de l'ytterbium à partir d'un mélange de terres rares avec un excellent rendement d'extraction puisqu'il est de 95 % et d'une très grande pureté puiqu'elle est de 99,3 %.

Exemple 2

Procédé de séparation du thulium (Tm) à partir d'un mélange contenant des nitrates de thulium (Tm), ytterbium (Yb), lutécium (Lu) et yttrium (Y)

On réalise cet exemple en suivant le mode de mise en œuvre illustré par la figure 2.

L'appareillage utilisé pour la séparation desdites terres rares comprend :

une première batterie d'extraction liquide-liquide à plusieurs étages du type mélange-décanteur, fonctionnant à contre-courant et constituée d'une section d'extraction (a) comportant 19 étages théoriques et d'une section de lavage (a') comportant 16 étages théoriques

une première section de régénération-récupération du solvant d'extraction (b) comportant 10 étages théoriques

un évaporateur pour concentrer la solution aqueuse issue de (a)

une deuxième batterie d'extraction liquide-liquide constituée d'une section d'extraction (c) comportant 8 étages théoriques et d'une section de lavage (c') comportant 10 étages théoriques

une deuxième section de régénération-récupération du solvant d'extraction (d) comportant 8 étages théoriques.

Le mélange initial de terres rares à séparer est une solution de nitrates de terres rares présentant une normalité 1,0 N et une concentration en terres rares exprimée en oxydes de terres rares de 132 g/l répartis de la façon suivante :

| | |
|---|---|
| oxyde de thulium | 12 % |
| oxyde d'ytterbium | 77 % |
| oxyde de lutécium | 10,9 % |
| oxyde d'yttrium | 0,1 % |

L'agent d'extraction utilisé est l'acide bis (triméthyl-2,4,4 pentyl) phosphinique. Il est mis en œuvre sous sa forme commercialisée sous la marque CYANEX 272® et contient 10 % d'oxyde de tri (triméthyl-2,4,4 pentyl) phosphine.

Ledit agent d'extraction est mis en solution dans le kérosène à raison de 1 mole/litre et le mélange obtenu sera appelé solvant d'extraction.

Avant de détailler les différentes opérations, on précisera que l'on choisit comme entrée et sortie des unités d'extraction-lavage et de régénération-récupération, le sens de circulation de la phase organique.

Dans une première série d'étapes :

— on introduit en sortie de l'unité d'extraction (a), par le conduit (1), la solution de nitrates de terres rares à séparer avec un débit de 15 l/h: en entrée de l'unité d'extraction (a), on introduit d'une part par le conduit (2) le solvant d'extraction avec un débit de 380 l/h et d'autre part par le conduit (3) une solution aqueuse d'ammoniaque 10 N avec un débit de 9,2 l/h ;

— on introduit dans l'unité de lavage (a') par le conduit (4), une solution aqueuse d'acide nitrique 2 N avec un débit de 3 l/h ;

— on recueille à l'entrée de l'unité d'extraction (a) par le conduit (5), une solution aqueuse de nitrates de terres rares ayant une concentration exprimée en oxydes de terres rares de 8,7 g/l et dont la composition est la suivante : 99 % de $Tm_2O_3$, 1 % de $Y_2O_3$ et moins de 200 p.p.m. de $Yb_2O_3 + Lu_2O_3$ ;

— on introduit la phase organique provenant de la section de lavage (a') dans la section de régénération-récupération (B) toujours avec le même débit de 380 l/h à contre-courant d'une solution d'acide nitrique 1 N admise par le conduit (6) avec un débit de 45 l/h ;

on recueille à l'entrée de la section de régénération-récupération (b) par le conduit (7), une solution

aqueuse de nitrates de terres rares ayant une concentration en terres rares exprimée en oxydes de terres rares de 38,7 g/l et dont la composition est la suivante : 87,5 % de $Yb_2O_3$, 12,5 % de $Lu_2O_3$ et moins de 1 000 p.p.m. de $Tm_2O_3 + Y_2O_3$ ;

— on récupère à la sortie de la section de régénération-récupération (b) par le conduit (8) le solvant d'extraction purifié qui peut être recyclé en (2) dans l'unité d'extraction (a) avec le même débit.

Dans une étape intermédiaire, on réalise la concentration de la solution aqueuse de nitrates de terres rares issue du conduit (5) à l'entrée de l'unité d'extraction (a) et contenant essentiellement des nitrates de thulium et d'yttrium par évaporation de ladite solution jusqu'à obtention d'une concentration exprimée en oxydes de terres rares de 23,7 g/l ;

Dans une deuxième série d'étapes :

— on introduit en sortie de l'unité d'extraction (c) par le conduit (9), la solution de nitrates de thulium et yttrium qui a été concentrée avec un débit de 10 l/h ; en entrée de l'unité d'extraction (c), on introduit d'une part, par le conduit (10) le même solvant d'extraction que précédemment avec un débit de 110 l/h et d'autre part, par le conduit (11), une solution aqueuse d'ammoniaque 10 N avec un débit de 2,5 l/h ;

— on introduit dans l'unité de lavage (c') par le conduit (12), une solution aqueuse d'acide nitrique 1,25 N avec un débit de 10 l/h ;

— on recueille à l'entrée de l'unité d'extraction (c) par le conduit (13), une solution aqueuse contenant des traces de nitrate d'yttrium et de nitrate de thulium ;

— on introduit la phase organique provenant de la section de lavage (c') dans la section régénération-récupération (d) toujours avec le même débit de 110 l/h à contre-courant d'une solution d'acide nitrique 1,25 N admise par le conduit (14) avec un débit de 13 l/h ;

— on recueille à l'entrée de la section de régénération-récupération (d) par le conduit (15) une solution aqueuse de nitrate de thulium ayant une concentration exprimée en $Tm_2O_3$ de 61,5 g/l et contenant moins de 20 p.p.m. de $Y_2O_3$ et moins de 200 p.p.m. de $Yb_2O_3 + Lu_2O_3$ ;

— on récupère à la sortie de la section de régénération-récupération (d) par le conduit (16), le solvant d'extraction purifié qui peut être recyclé en (10) dans l'unité d'extraction (c) avec le même débit.

Le procédé conforme à la présente invention permet d'obtenir du thulium à partir d'un mélange de terres rares avec un rendement d'extraction de 99,9 % et il présente une pureté de 99,9 %.

## Exemple 3

Procédé de séparation de terbium (Tb) et de dysprosium (Dy) à partir d'un mélange contenant des nitrates de terbium (Tb), dysprosium (Dy), samarium (Sm), europium (Eu) et gadolinium (Gd)

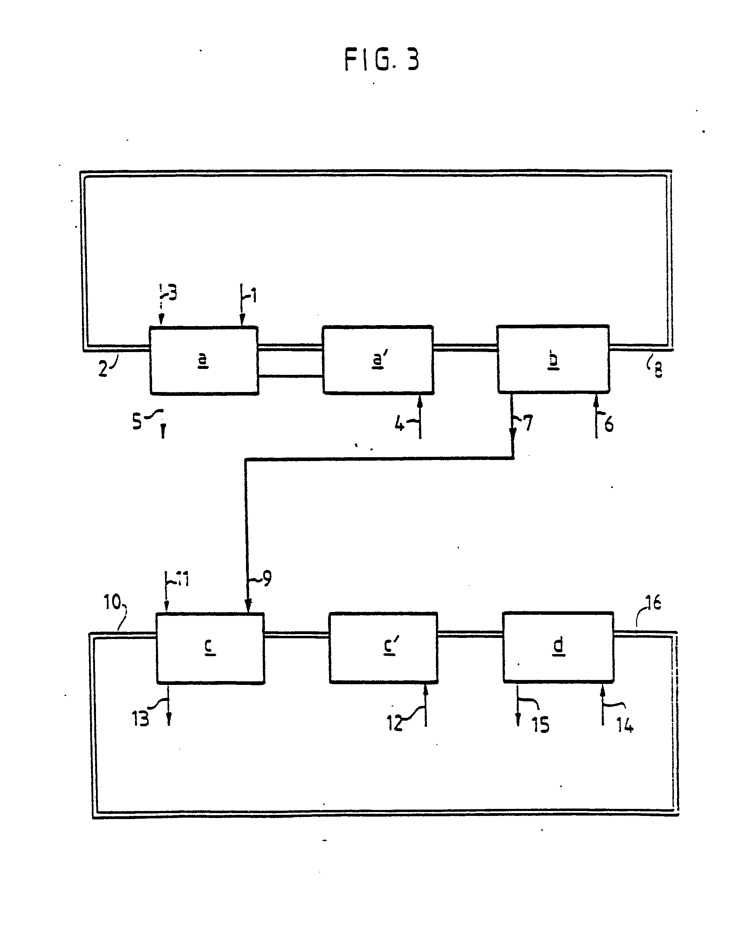

On réalise cet exemple en suivant le mode de mise en œuvre illustré par la figure 3.

L'appareillage utilisé pour la séparation desdites terres rares comprend :

— une première batterie d'extraction liquide-liquide à plusieurs étages du type mélange-décanteur, fonctionnant à contre-courant et constituée d'une section d'extraction (a) comportant 10 étages théoriques et d'une section de lavage (a') comportant 4 étages théoriques

— une première section de régénération-récupération du solvant d'extraction (b) comportant 5 étages théoriques

— une deuxième batterie d'extraction liquide-liquide constituée d'une section d'extraction (c) comportant 13 étages théoriques et d'une section de lavage (c') comportant 5 étages théoriques

— une deuxième section de régénération-récupération du solvant d'extraction (d) comportant 4 étages théoriques.

Le mélange initial de terres rares à séparer est une solution de nitrates de terres rares présentant une normalité 0,01 N et une concentration en terres rares exprimée en oxydes de terres rares de 157,3 g/l répartis de la façon suivante :

| | |
|---|---|
| oxyde de terbium | 3 % |
| oxyde de dysprosium | 10,5 % |
| oxyde de samarium | 49 % |
| oxyde d'europium | 1,5 % |
| oxyde de gadolinium | 36 % |

L'agent d'extraction utilisé est l'acide bis(triméthyl-2,4,4 pentyl) phosphinique. Il est mis en œuvre sous sa forme commercialisée sous la marque CYANEX 272® et contient 10 % d'oxyde de tri(triméthyl-2,4,4 pentyl) phosphine.

Ledit agent d'extraction est mis en solution dans le kérosène à raison de 1 mole/litre et le mélange obtenu sera appelé solvant d'extraction.

Dans une première série d'étapes :

— on introduit en sortie de l'unité d'extraction (a), par le conduit (1), la solution de nitrates de terres rares à séparer avec un débit de 200 l/h : en entrée de l'unité d'extraction (a), on introduit d'une part par le conduit (2) le solvant d'extraction avec un débit de 1 150 l/h et d'autre part par le conduit (3) une solution aqueuse d'ammoniaque 10 N avec un débit de 78 l/h ;

— on introduit dans l'unité de lavage (a') par le conduit (4), une solution aqueuse d'acide nitrique 4 N avec un débit de 66 l/h ;

— on recueille à l'entrée de l'unité d'extraction (a) par le conduit (5), une solution aqueuse de nitrates de terres rares ayant une concentration exprimée en oxydes de terres rares de 79,1 g/l et dont la composition est la suivante : 56,7 % de $Sm_2O_3$, 41,6 % de $Gd_2O_3$, 1,7 % de $Eu_2O_3$ et moins de 0,2 % de $Tb_4O_7 + Dy_2O_3$ exprimé par rapport au poids du mélange des oxydes de samarium, de gadolinium et d'europium ;

— on introduit la phase organique provenant de la section de lavage (a') dans la section de régénération-récupération (b) toujours avec le même débit de 1 150 l/h à contre-courant d'une solution d'acide nitrique 4 N admise par le conduit (6) avec un débit de 20 l/h ;

— on recueille à l'entrée de la section de régénération-récupération (b) par le conduit (7), une solution aqueuse de nitrates de terres rares ayant une concentration en terres rares exprimée en oxydes de terres rares de 212,3 g/l et dont la composition est la suivante : 22 % de $Tb_4O_7$ et 78 % de $Dy_2O_3$.

— on récupère à la sortie de la section de régénération-récupération (b) par le conduit (8) le solvant d'extraction purifié qui peut être recyclé en (2) dans l'unité d'extraction (a) avec le même débit.

Dans une deuxième série d'étapes :

— on introduit en sortie de l'unité d'extraction (c) par le conduit (9), la solution de nitrates de terbium et de dysprosium recueillie par le conduit (7) à l'entrée de la section régénération-récupération (b) de l'étape précédente avec un débit de 20 l/h ; en entrée de l'unité d'extraction (c), on introduit d'une part, par le conduit (10) le même solvant d'extraction que précédemment avec un débit de 655 l/h et d'autre part, par le conduit (11), une solution aqueuse d'ammoniaque 10 N avec un débit de 16,8 l/h ;

— on introduit dans l'unité de lavage (c') par le conduit (12), une solution aqueuse d'acide nitrique 4 N avec un débit de 26,5 l/h ;

— on recueille à l'entrée de l'unité d'extraction (c) par le conduit (13), une solution aqueuse de nitrate de terbium à 99,9 % ayant une concentration en $Tb_4O_7$ de 14,8 g/l ;

— on introduit la phase organique provenant de la section de lavage (c') dans la section régénération-récupération (d) toujours avec le même débit de 655 l/h à contre-courant d'une solution d'acide nitrique 4 N admise par le conduit (14) avec un débit de 15,6 l/h ;

— on recueille à l'entrée de la section de régénération-récupération (d) par le conduit (15) une solution aqueuse de nitrate de dysprosium ayant une concentration exprimée en $Dy_2O_3$ de 212,3 g/l et contenant moins de 1 % de $Tb_4O_7$ ;

— on récupère à la sortie de la section de régénération-récupération (d) par le conduit (16), le solvant d'extraction purifié qui peut être recyclé en (10) dans l'unité d'extraction (c) avec le même débit.

Le procédé conforme à la présente invention permet d'obtenir du terbium à partir d'un mélange de terres rares avec un rendement d'extraction de 95 % et une pureté de 99,9 % et du dysprosium avec un rendement d'extraction de 98 % et une pureté de 99 %.

## Exemple 4

Pour illustrer la sélectivité du procédé de l'invention pour la séparation d'au moins un élément choisi dans le groupe constitué par les lanthanides et l'yttrium, on opère selon le mode opératoire donné dans l'exemple 1, toujours en milieu nitrate, en utilisant l'acide bis (triméthyl-2,4,4 pentyl) phosphinique (CYANEX 272)®.

On met en contact une phase aqueuse nitrique de concentration égale à 100 g d'oxydes de terres rares par litre de phase aqueuse avec une phase organique constituée par l'acide bis (triméthyl-2,4,4 pentyl) phosphinique en solution dans le kérosène à raison de 1 mole/litre : le rapport des volumes des phases étant égal à l'unité.

L'extraction est réalisée à température ambiante.

Ceci permet de déterminer les facteurs de séparation pour les couples considérés qui sont consignés dans le tableau suivant :

| $IR_1$ | Nd | Sm | Eu | Gd | Tb | Dy | Ho | Y | Er | Tm | Yb |
|---|---|---|---|---|---|---|---|---|---|---|---|
| $IR_2$ | Sm | Eu | Gd | Tb | Dy | Ho | Y | Er | Tm | Yb | Lu |
| $F = PIR_2/PIR_1$ | 14,9 | 2,21 | 1,28 | 4,78 | 2,38 | 1,68 | 1,44 | 1,53 | 2,79 | 2,87 | 1,47 |
| Concentration de la phase organique exprimée en oxydes de terres rares (en g/l) | | 8,15 | | | 10,8 | | | 11,7 | | 15,7 | |

Les valeurs des facteurs de séparation données dans les exemples ci-dessus permettent de calculer les conditions à mettre en œuvre pour séparer deux ou plusieurs éléments pris dans le groupe constitué par les terres rares et l'yttrium selon les techniques classiques d'extraction liquide/liquide.

**Revendications**

1. Procédé de séparation de lanthanides et d'yttrium contenus dans une solution aqueuse renfermant au moins deux de ces terres rares par extraction liquide-liquide entre une phase aqueuse contenant les terres rares à séparer sous forme nitrate et une phase organique contenant un composé organophosphinique caractérisé par le fait que l'agent d'extraction est constitué par au moins un composé organophosphinique répondant à la formule (I) :

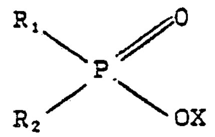

(I)

dans ladite formule :

$R_1$, $R_2$, identiques ou différents, éventuellement substitués, représentent des radicaux alkyle, cycloalkyle, alkoxyalkyle, alkylcycloalkyle,

X est soit un atome d'hydrogène, soit un groupement salifié.

2. Procédé selon la revendication 1 caractérisé par le fait que ledit composé organophosphinique répond à la formule (I) dans laquelle $R_1$ et $R_2$ représentent des radicaux alkyle linéaires ou ramifiés ayant au moins 6 atomes de carbone ou des radicaux cycloalkyle ayant au moins 6 atomes de carbone et X est un atome d'hydrogène.

3. Procédé selon l'une des revendications 1 et 2 caractérisé par le fait que ledit composé organophosphinique est l'acide di-n-octylphosphinique, l'acide bis (éthyl-2 hexyl) phosphinique, l'acide bis (triméthyl-2,4,4 pentyl) phosphinique, l'acide triméthyl-2,4,4 pentyl, cyclohexylphosphinique, l'acide dicyclohexylphosphinique.

4. Procédé selon l'une des revendications 1 à 3 caractérisé par le fait que la solution aqueuse de nitrate de terres rares présente une concentration en terres rares en oxydes de terres rares comprise entre 20 g/l et 500 g/l.

5. Procédé selon la revendication 4 caractérisé par le fait que la solution aqueuse de nitrates de terres rares présente une acidité comprise entre 0,01 N et 3,0 N.

6. Procédé selon l'une des revendications 1 à 5 caractérisé par le fait que la phase organique comporte en outre au moins un diluant organique choisi parmi les hydrocarbures aliphatiques, les coupes pétrolières du type kérosène ou Solvesso® les hydrocarbures aromatiques, les hydrocarbures halogénés.

7. Procédé selon la revendication 1 caractérisé par le fait que la concentration du composé organophosphinique dans la phase organique est comprise entre 5 et 100 % du volume de la phase organique.

8. Procédé selon l'une des revendications 1 à 7 caractérisé par le fait que la phase organique comporte en outre au moins un agent modifieur choisi parmi les composés à fonction alcool, les esters phosphoriques, les oxydes de phosphine, les sulfoxydes.

9. Procédé selon la revendication 8 caractérisé par le fait que la concentration de l'agent modifieur dans la phase organique est comprise entre 3 et 20 % du volume de la phase organique.

10. Procédé selon l'une des revendications 1 à 9 caractérisé par le fait que la concentration en ions $H^+$ de la phase aqueuse au cours de l'extraction est telle que le pH d'extraction est supérieur ou égal à 3.

11. Procédé selon la revendication 10 caractérisé par le fait que ladite concentration en ions $H^+$ est ajustée par ajout d'une base alcaline.

12. Procédé selon la revendication 10 caractérisé par le fait que la base alcaline est la soude ou l'ammoniaque.

13. Procédé selon l'une des revendications 1 à 12 caractérisé par le fait que la température d'extraction se situe entre 10 °C et 50 °C.

14. Procédé selon l'une des revendications 1 à 13 caractérisé par le fait que l'on procède après l'étape d'extraction, à une opération de lavage de la phase organique à l'aide d'une solution aqueuse contenant des ions nitrates.

15. Procédé selon la revendication 14 caractérisé par le fait que la solution de lavage est une solution aqueuse d'acide nitrique ayant une concentration comprise entre 0,1 N et 10 N.

16. Procédé selon la revendication 15 caractérisé par le fait que la concentration de la solution aqueuse d'acide nitrique est comprise entre 0,3 N et 5 N.

17. Procédé selon la revendication 14 caractérisé par le fait que la solution de lavage est une solution

aqueuse de nitrates de terres rares dont la concentration exprimée en oxydes de terres rares est comprise entre 5 et 500 g/l.

18. Procédé selon la revendication 17 caractérisé par le fait que la concentration en terres rares de la solution aqueuse de nitrates de terres rares est comprise entre 25 et 300 g/l.

19. Procédé selon l'une des revendications 1 à 18 caractérisé par le fait que l'on procède après les étapes d'extraction et de lavage successives suivies par une séparation de la phase aqueuse et de la phase organique à une étape de régénération du solvant d'extraction par mise en contact de la phase organique avec une solution aqueuse acide.

20. Procédé selon la revendication 19 caractérisé par le fait que la solution aqueuse acide est une solution aqueuse d'acide nitrique, d'acide sulfurique, d'acide chlorhydrique, d'acide perchlorique.

21. Procédé selon la revendication 20 caractérisé par le fait que la solution aqueuse acide est une solution d'acide nitrique.

22. Procédé selon l'une des revendications 20 et 21 caractérisé par le fait que la normalité de la solution aqueuse acide est comprise entre 0,5 N et 10 N.

23. Procédé selon la revendication 22 caractérisé par le fait que la normalité de la solution aqueuse acide est comprise entre 1 et 5 N.

24. Procédé selon l'une des revendications 1 à 23 caractérisé par le fait que dans une première étape, dans le but de séparer au moins deux terres rares ou deux sous-groupes de terres rares, on met en contact la solution aqueuse de nitrates de terres rares avec une phase organique constituée d'un diluant et dudit composé organophosphinique de façon à extraire dans la phase organique la terre rare ou le sous-groupe de terres rares possédant le coefficient de partage le plus élevé : l'autre terre rare ou le sous-groupe de terres rares restant essentiellement en phase aqueuse ; dans une deuxième étape, on effectue le lavage sélectif de la phase organique à l'aide d'une solution aqueuse contenant des ions nitrate afin d'éliminer la faible quantité de la terre rare ou du sous-groupe de terres rares les moins extraites dans la phase organique par passage en phase aqueuse : on sépare ensuite la phase organique de la phase aqueuse ; dans une troisième étape, on effectue la régénération du solvant d'extraction par mise en contact de la phase organique avec une solution aqueuse acide.

**Claims**

1. Process for the separation of lanthanides and yttrium present in an aqueous solution containing at least two of these rare earths by liquid-liquid extraction between an aqueous phase containing the rare earths to the separated in a nitrate form and an organic phase containing an organophosphinic compound, characterized in that the extractant consists of at least one organophosphinic compound corresponding to the formula (I) :

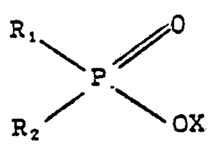

(I)

in the said formula :

$R_1$, $R_2$, identical or different, optionally substituted, denote alkyl, cycloalkyl, alkoxyalkyl or alkylcycloalkyl radicals, and

X is either a hydrogen atom or a salified group.

2. Process according to Claim 1, characterized in that the said organophosphinic compound corresponds to the formula (I) in which $R_1$ and $R_2$ denote straight-chain or branched alkyl radicals containing at least 6 carbon atoms or cycloalkyl radicals containing at least 6 carbon atoms and X is a hydrogen atom.

3. Process according to either of Claims 1 and 2, characterized in that the said organophosphinic compound is di-n-octylphosphinic acide, bis(2-ethylhexyl) phosphinic acid, bis(2,4,4-trimethylpentyl) phosphinic acid, 2,4,4-trimethylpentylcyclohexylphosphinic acid or dicyclohexylphosphinic acid.

4. Process according to one of Claims 1 to 3, characterized in that the aqueous solution of rare earth nitrates has a rare earth concentration, expressed as rare earth oxides, of between 20 g/l and 500 g/l.

5. Process according to Claim 4, characterized in that the aqueous solution of rare earth nitrates has an acidity of between 0.01 N and 3.0 N.

6. Process according to one of Claims 1 to 5, characterized in that the organic phase additionally contains at least one organic diluent chosen from aliphatic hydrocarbons, petroleum cuts of the kerosene or Solvesso® type, aromatic hydrocarbons or halogenated hydrocarbons.

7. Process according to Claim 1, characterized in that the concentration of the organophosphinic compound in the organic phase is between 5 and 100 % of the volume of the organic phase.

8. Process according to one of Claims 1 to 7, characterized in that the organic phase additionally contains at least one modifier chosen from compounds containing an alcohol group, phosphoric esters,

phosphine oxides and sulphoxides.

9. Process according to Claim 8, characterized in that the concentration of the modifier in the organic phase is between 3 and 20 % of the volume of the organic phase.

10. Process according to one of Claims 1 to 9, characterized in that the $H^+$ ion concentration of the aqueous phase during the extraction in such that the extraction pH is greater than or equal to 3.

11. Process according to Claim 10, characterized in that the said $H^+$ ion concentration is adjusted by adding an alkaline base.

12. Process according to Claim 10, characterized in that the alkaline base is sodium hydroxide or ammonia.

13. Process according to one of Claims 1 to 12, characterized in that the temperature of extraction is between 10 °C and 50 °C.

14. Process according to one of Claims 1 to 13, characterized in that, after the extraction stage, an operation of washing the organic phase with an aqueous solution containing nitrate ions is carried out.

15. Process according to Claim 14, characterized in that the washing solution is an aqueous solution of nitric acid at a concentration of between 0.1 N and 10 N.

16. Process according to Claim 15, characterized in that the concentration of the aqueous solution of nitric acid is between 0.3 N and 5 N.

17. Process according to Claim 14, characterized in that the washing solution is an aqueous solution of rare earth nitrates, the concentration of which, expressed as rare earth oxides, is between 5 and 500 g/l.

18. Process according to Claim 17, characterized in that the rare earth concentration of the aqueous solution of rare earth nitrates is between 25 and 300 g/l.

19. Process according to one of Claims 1 to 18, characterized in that, after the successive extraction and washing stages followed by a separation of the aqueous phase from the organic phase, a stage for the regeneration of the extraction solvent is carried out by contacting the organic phase with an aqueous acid solution.

20. Process according to Claim 19, characterized in that the aqueous acid solution is an aqueous solution of nitric acid, sulphuric acid, hydrochloric acid, or perchloric acid.

21. Process according to Claim 20, characterized in that the aqueous acid solution is a solution of nitric acid.

22. Process according to either of Claims 20 and 21, characterized in that the normality of the aqueous acid solution is between 0.5 N and 10 N.

23. Process according to Claim 22, characterized in that the normality of the aqueous acid solution is between 1 and 5 N.

24. Process according to one of Claims 1 to 23, characterized in that in a first stage, in order to separate at least two rare earths or two subgroups of rare earths, the aqueous solution of rare earth nitrates is brought into contact with an organic phase consisting of a diluent and of the said organophosphinic compound so as to extract in the organic phase the rare earth or the subgroup of rare earths having the higher partition coefficient, the other rare earth or subgroup of rare earths remaining substantially in the aqueous phase ; in a second stage, selective washing of the organic phase is carried out with an aqueous solution containing nitrate ions in order to remove the small quantity of the rare earth or the subgroup of rare earths extracted to a smaller degree in the organic phase by passing into aqueous phase ; the organic phase is then separated from the aqueous phase ; in a third stage, regeneration of the extraction solvent is carried out by contacting the organic phase with an aqueous acid solution.

**Patentansprüche**

1. Verfahren zur Trennung von Lanthaniden und Yttrium, die in einer wenigstens zwei dieser Seltenen Erden enthaltenden wässrigen Lösung enthalten sind, durch Flüssig-Flüssig-Extraktion zwischen einer wässrigen Phase, die die zu trennenden Seltenen Erden in Form der Nitrate enthält und einer organischen Phase, die eine Organophosphin-Verbindung enthält, dadurch gekennzeichnet, daß das Extraktionsagens aus wenigstens einer Organophosphin-Verbindung gemäß Formel (I) :

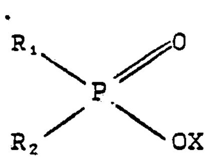

(I)

besteht, wobei in dieser Formel :

$R_1$, $R_2$, jeweils gleich oder verschieden, gegebenenenfalls substituiert Alkyl-, Cycloalkyl-, Alkoxyalkyl-, Alkylcycloalkyl-Reste bedeuten und

X entweder ein Wasserstoffatom oder ein Salzrest ist.

2. Verfahren nach Anspruch 1, dadurch gekennzeichnet, daß die Organophosphin-Verbindung der Formel (I) entspricht, in der $R_1$ und $R_2$ lineare oder verzweigte Alkylreste mit wenigstens 6 Kohlenstoffatomen oder Cycloalkylreste mit wenigstens 6 Kohlenstoffatomen bedeuten und X ein Wasserstoffatom ist.

3. Verfahren nach einem der Ansprüche 1 und 2, dadurch gekennzeichnet, daß die Organophosphin-Verbindung Di-n-octylphosphinsäure, Bis(ethyl-2-hexyl) phosphinsäure, Bis(Trimethyl-2,4,4-pentyl) phosphinsäure, oder Dicyclohexylphosphinsäure ist.

4. Verfahren nach einem der Ansprüche 1 bis 3, dadurch gekennzeichnet, daß die wässrige Lösung der Seltenerdnitrate eine Konzentration an Seltenen Erden, ausgedrückt als Seltenerdoxide, zwischen 20 g/l und 500 g/l aufweist.

5. Verfahren nach Anspruch 4, dadurch gekennzeichnet, daß die wässrige Lösung der Seltenerdnitrate eine Acidität zwischen 0,01 N und 3,0 N aufweist.

6. Verfahren nach einem der Ansprüche 1 bis 5, dadurch gekennzeichnet, daß die organische Phase daneben wenigstens ein organisches Verdünnungsmittel enthält, ausgewählt aus den aliphatischen Kohlenwasserstoffen, Erdölfraktionen vom Kerosin-bzw. Solvesso®-Typ, aromatischen Kohlenwasserstoffen und halogenierten Kohlenwasserstoffen.

7. Verfahren nach Anspruch 1, dadurch gekennzeichnet, daß die Konzentration der Organophosphin-Verbindung in der organischen Phase zwischen 5 und 100 Vol.% der organischen Phase liegt.

8. Verfahren nach einem der Ansprüche 1 bis 7, dadurch gekennzeichnet, daß die organische Phase zusätzlich wenigstens ein modifizierendes Agens enthält, ausgewählt aus den Verbindungen mit Alkohol-Funktionen, Phosphorsäureestern Phosphinoxiden und Sulfoxiden.

9. Verfahren nach Anspruch 8, dadurch gekennzeichnet, daß die Konzentration des modifizierenden Agens in der organischen Phase zwischen 3 und 20 Vol.% der organischen Phase beträgt.

10. Verfahren nach einem der Ansprüche 1 bis 9, dadurch gekennzeichnet, daß die Konzentration der $H^+$-Ionen in der wässrigen Phase im Verlauf der Extraktion derart ist, daß der pH-Wert bei der Extraktion größer oder gleich 3 ist.

11. Verfahren nach Anspruch 10, dadurch gekennzeichnet, daß diese Konzentration der $H^+$-Ionen durch Zugabe einer Alkali-Base eingestellt wird.

12. Verfahren nach Anspruch 10, dadurch gekennzeichnet, daß die Alkalibase Natriumhydroxid oder Ammoniak ist.

13. Verfahren nach einem der Ansprüche 1 bis 12, dadurch gekennzeichnet, daß die Extraktionstemperatur zwischen 10 °C und 50 °C liegt.

14. Verfahren nach einem der Ansprüche 1 bis 13, dadurch gekennzeichnet, daß man nach dem Extraktionsschritt die organische Phase mit Hilfe einer wässrigen, nitrationenhaltigen Lösung wäscht.

15. Verfahren nach Anspruch 14, dadurch gekennzeichnet, daß die Waschlösung eine wässrige Lösung von Salpetersäure mit einer Konzentration zwischen 0,1 N und 10 N ist.

16. Verfahren nach Anspruch 15, dadurch gekennzeichnet, daß die Konzentration der wässrigen Salpetersäurelösung zwischen 0,3 N und 5 N liegt.

17. Verfahren nach Anspruch 14, dadurch gekennzeichnet, daß die Waschlösung eine wässrige Lösung von Seltenerdnitraten ist, deren Konzentration, ausgedrückt als Seltenerdoxide, zwischen 5 und 500 g/l liegt.

18. Verfahren nach Anspruch 17, dadurch gekennzeichnet, daß die Konzentration an Seltenen Erden in der wässrigen Seltenerdnitratlösung zwischen 25 und 300 g/l liegt.

19. Verfahren nach einem der Ansprüche 1 bis 18, dadurch gekennzeichnet, daß man nach den aufeinanderfolgenden Schritten Extraktion und Wäsche, auf die eine Trennung der wässrigen Phase und der organischen Phase folgt, einen Schritt zur Regenerierung des Extraktions-Lösemittels durchführt, indem man die organische Phase mit einer sauren wässrigen Lösung in Kontakt bringt.

20. Verfahren nach Anspruch 19, dadurch gekennzeichnet, daß die saure, wässrige Lösung eine wässrige Lösung von Salpetersäure, Schwefelsäure, Salzsäure oder Perchlorsäure ist.

21. Verfahren nach Anspruch 20, dadurch gekennzeichnet, daß die saure wässrige Lösung eine Salpetersäurelösung ist.

22. Verfahren nach einem der Ansprüche 20 und 21, dadurch gekennzeichnet, daß die Normalität der sauren, wässrigen Lösung zwischen 0,5 N und 10 N liegt.

23. Verfahren nach Anspruch 22, dadurch gekennzeichnet, daß die Normalität der wässrigen, sauren Lösung zwischen 1 und 5 N liegt.

24. Verfahren nach einem der Ansprüche 1 bis 23, dadurch gekennzeichnet, daß man in einer ersten Verfahrensstufe, in dem Bestreben wenigstens zwei Seltene Erden oder zwei Untergruppen Seltener Erden voneinander zu trennen, die wässrige Lösung von Seltenerdnitraten mit einer organischen Phase bestehend aus einem Verdünnungsmittel und der genannten Organophosphin-Verbindung in Kontakt bringt, so daß das Seltene Erdmetall oder die Untergruppe Seltener Erden mit dem höheren Verteilungskoeffizienten in die organische Phase extrahiert wird, wobei das andere Seltene Erdmetall oder die Untergruppe Seltener Erden im wesentlichen in der wässrigen Phase verbleibt ; in einem zweiten Schritt führt man das selektive Waschen der organischen Phase mit Hilfe einer wässrigen, nitrationenhaltigen Lösung durch, um die geringe Menge des jeweils weniger extrahierten Seltenen Erdmetalls oder der Untergruppe Seltener Erden aus der organischen Phase durch Überführung in die wässrige Phase zu entfernen, man trennt danach die organische Phase von der wässrigen Phase ab ; in einem dritten Schritt bewirkt man die Regenerierung des Extraktionslösungsmittels indem man die organische Phase mit einer wässrigen sauren Lösung in Kontakt bringt.

FIG. 1

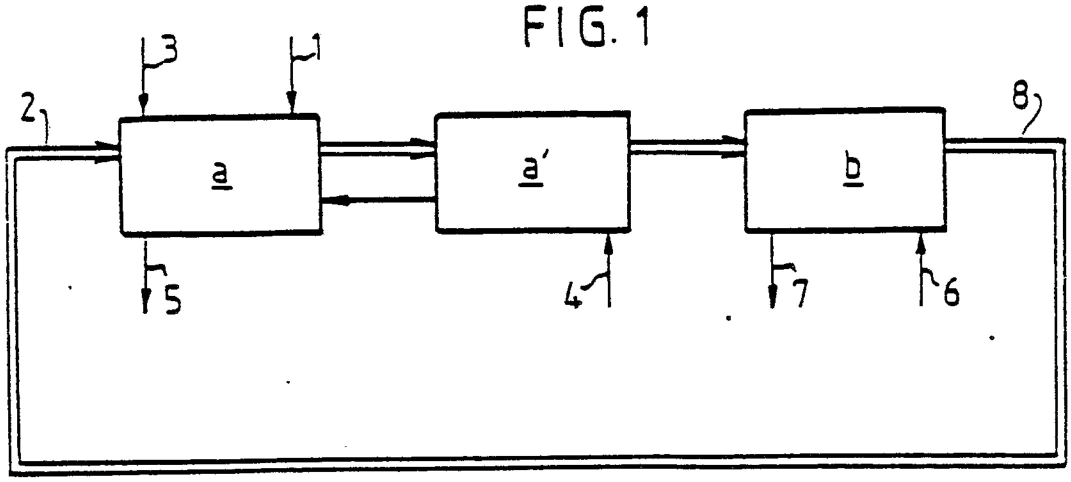


FIG. 2

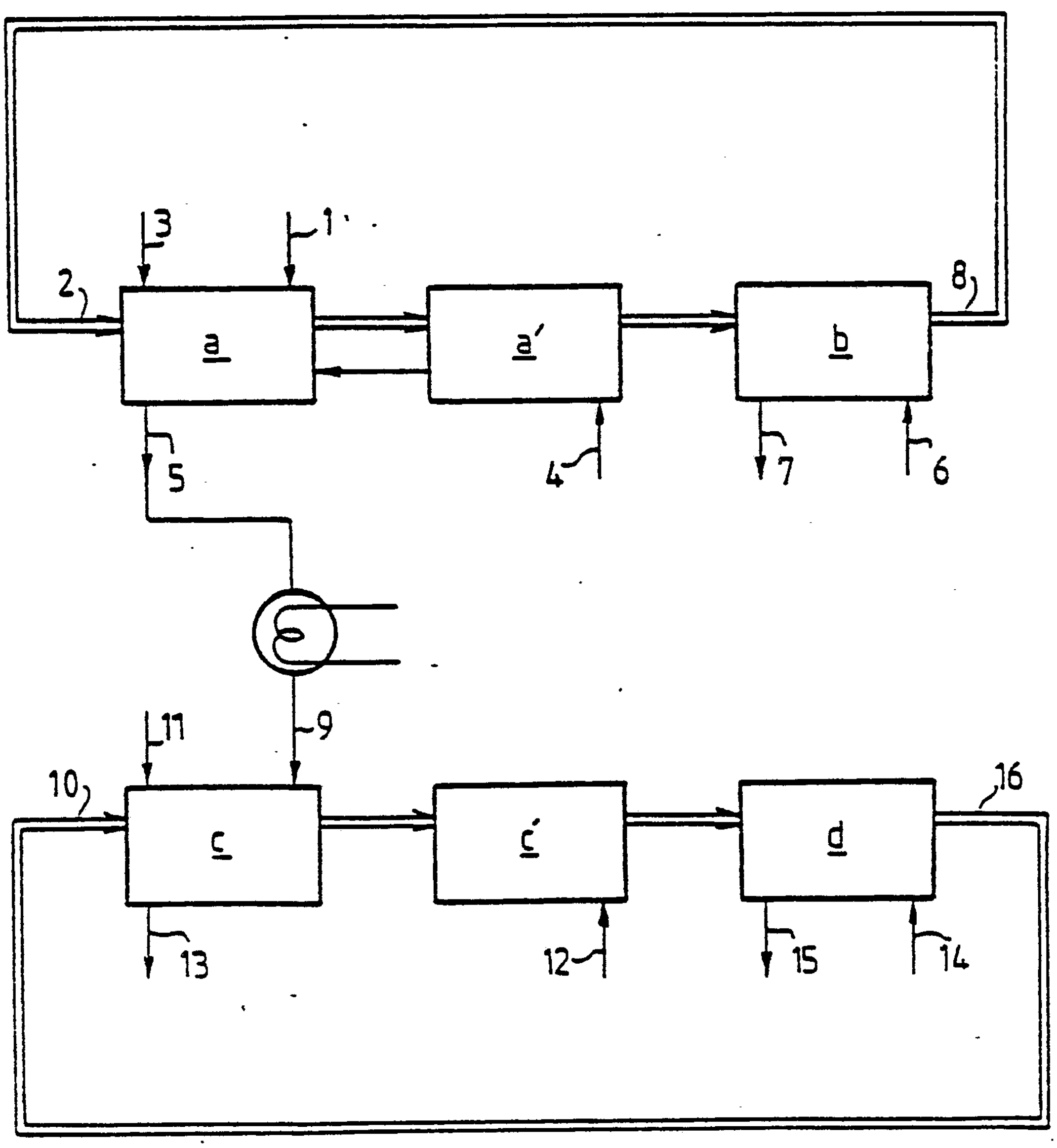

FIG. 3